# EUROPEAN PATENT SPECIFICATION

(11) **EP 4 106 049 B1**
(45) Date of publication and mention of the grant of the patent: **23.07.2025**
(21) Application number: 21892272.2
(22) Date of filing: 08.11.2021
(51) Int. Cl.: H01M 4/131, H01M 4/136, H01M 4/62, H01M 4/58, H01M 4/525, H01M 4/505, H01M 4/36, H01M 10/052

(54) **POSITIVE ELECTRODE FOR LITHIUM SECONDARY BATTERY, AND LITHIUM SECONDARY BATTERY**
POSITIVELEKTRODE FÜR LITHIUMSEKUNDÄRBATTERIE UND LITHIUMSEKUNDÄRBATTERIE
ÉLECTRODE POSITIVE POUR BATTERIE SECONDAIRE AU LITHIUM ET BATTERIE SECONDAIRE AU LITHIUM

(30) Priority: 16.11.2020 KR 20200152863
(43) Date of publication of application: 21.12.2022
(73) Proprietor: LG Energy Solution, Ltd., Seoul 07335 (KR)
(72) Inventor: LEE, Kyung Min, Daejeon 34122 (KR); JUNG, Bum Young, Daejeon 34122 (KR)
(74) Representative: Plasseraud IP
(86) International application number: PCT/KR2021/016158
(87) International publication number: WO 2022/103104

(56) References cited:
- WO-A1-2020/050895
- CN-A- 106 486 639
- KR-A- 20060 052 499
- KR-A- 20070 015 001
- KR-A- 20170 033 443
- KR-B1- 102 133 383
- US-A1- 2020 161 640

## Description

### [Technical Field]

The present invention relates to a positive electrode for a lithium secondary battery, and more particularly, to a positive electrode for a lithium secondary battery having an improved safety and without deterioration of lifespan characteristics of a battery, and a lithium secondary battery.

### [Background Art]

As technology development and demand for mobile devices increase, the demand for secondary batteries as energy sources is rapidly increasing. Among such secondary batteries, lithium secondary batteries having a high energy density and operating potential, a long cycle life and a low self-discharge rate are commercialized and widely used.

Recently, as a lithium secondary battery is used as a power source of a medium or large size device such as an electric vehicle, a high capacity, a high energy density and low costs for lithium secondary batteries are required. As such, studies have been actively conducted to use low-cost Ni, Mn, Fe, etc. which may substitute expensive Co.

One of main research tasks about the lithium secondary battery is in implementing a high capacity and a high output electrode active material and improving safety of the battery using the same. Lithium transition metal complex oxide is used as the positive electrode active material, and among them, a lithium cobalt complex metal oxide having excellent capacity characteristics and a high operating voltage is mainly used. Further, since LiCoO₂ has very poor thermal characteristics due to unstable crystal structure according to delithiation and is expensive, it is difficult for a large amount of LiCoO₂ to be used as the power source for electric vehicles, etc.

Lithium manganese complex metal oxide (LiMnO₂ or LiMn₂O₄, etc.), lithium iron phosphate compound (LiFePO₄, etc.), or lithium nickel complex metal oxide (LiNiO₂, etc.) has been developed. Among them, lithium nickel complex metal oxide, which can be easily implemented as a large capacity battery by having a large reversible capacity of about 200 mAh/g, is currently actively researched and developed. However, compared to LiCoO₂, thermal stability of LiNiO₂ is not good, and when an internal short circuit occurs by pressure from an external side in a charged state, the positive electrode active material itself is decomposed, thereby causing rupture and ignition of the battery.

As such, a method of substituting part of nickel (Ni) with cobalt (Co) or manganese (Mn) was suggested as a method for improving a low thermal stability while maintaining an excellent reversible capacity of LiNiO₂. However, in the case of LiNi_{1-α}Co_{α}O₂ (α=0.1~0.3), which is obtained by substituting part of nickel with cobalt, charge and discharge characteristics and lifespan characteristics are excellent, but thermal stability is low. Further, in the case of nickel-manganese-based lithium composite metal oxide, which is obtained by substituting part of Ni with Mn having excellent thermal stability, and nickel-cobalt-manganese-based lithium composite metal oxide (hereinafter, referred to "NCM-based lithium oxide"), which is obtained by substituting part of Ni with Mn and Co, cycle characteristics and thermal stability are relatively excellent, but since the penetration resistance is low, an internal short circuit does not occur when a metal body such as a nail penetrates, and accordingly ignition or explosion may occur due to overcurrent.

Korean Patent Publication No. 2019-0047203 discloses a technology for securing safety of a battery by blocking a charging current by increasing the resistance at the time of an overcharge by interposing an overcharge preventing layer between a positive electrode current collector and a positive electrode active material layer.

However, in the prior art literature, safety is improved in an electrode having an overcharge preventing layer, but an interlayer crack may be generated due to a difference in the composition of the overcharge preventing layer and the positive electrode active material layer, and accordingly, the lifespan characteristics of the battery may deteriorate. Further, in the above prior art literature, the overcharge preventing layer has a low penetration resistance. As such, when penetrated by a needle body, there may be a problem from the perspective of safety.

Therefore, there is a need for a technology about a positive electrode for a secondary battery capable of increasing the penetration resistance in the case that a metal body such as a nail penetrates an electrode, without deteriorating the lifespan characteristics while improving the safety.

### [Disclosure]

### [Technical Problem]

An object of the present invention is to provide a positive electrode for a secondary battery capable of increasing the penetration resistance in the case that a metal body such as a nail from an external side penetrates an electrode while having high capacity and high output performance, excellent cycle characteristics, and thermal stability, and a lithium secondary battery including the positive electrode.

### [Technical Solution]

The invention is defined in the appended claims.

A positive electrode for a lithium secondary battery according to the present invention includes: a safety function layer arranged on a positive electrode current collector; and a positive electrode mixture layer arranged on the safety function layer,
the safety function layer is formed of a multi-layer structure of two or more layers including a first safety function layer contacting the positive electrode current collector, and a second safety function layer arranged on the first safety function layer, and
the second safety function layer is obtained by mixing a composition of the first safety function layer with a composition of the positive electrode mixture layer.

In an embodiment of the present invention, the first safety function layer includes a first positive electrode active material, and the positive electrode mixture layer includes a second positive electrode active material which is different from the first positive electrode active material.

In an embodiment of the present invention, the first positive electrode active material is lithium iron phosphate having an olivine structure, represented by a following chemical formula 1:

[Chemical formula 1] Li₁₊ₐFe₁₋ₓMₓ(PO_{4-b})X_{b}

Herein, M is at least one selected from the group consisting of Al, Mg and Ti, X is at least one selected from the group consisting of F, S and N, -0.5≤a≤+0.5, 0≤x≤0.5, and 0≤b≤0.1.

In an embodiment of the present invention, the second positive electrode active material is a lithium transition metal oxide represented by a following chemical formula 2:

[Chemical formula 2] LiₐNi_{1-x-y}COₓMn_{y}M_{z}O₂

Herein, M is at least one selected from the group consisting of Al, Zr, Ti, Mg, Ta, Nb, Mo and Cr, and wherein 0.9≤a≤1.5, 0≤x≤1, 0≤y≤0.5, 0≤z≤0.1, and 0≤x+y≤1.

In an embodiment of the present invention, the second safety function layer contains the first positive electrode active material, the second positive electrode active material, and a binder.

In an embodiment of the present invention, the second safety function layer contains the first positive electrode active material and the second positive electrode active material at a weight ratio of 85: 15 to 25: 75.

In an embodiment of the present invention, adhesive force A between the positive electrode current collector and the first safety function layer is greater than adhesive force B between the first safety function layer and the second safety function layer.

In an embodiment of the present invention, the adhesive force B is equal to or greater than adhesive force C between the second safety function layer and the positive electrode mixture layer.

The content of a binder included in the first safety function layer corresponds to 5 to 30 wt% of a total weight of the first safety function layer.

In an embodiment of the present invention, a weight ratio of the binder included in each layer gradually decreases as a distance from the current collector increases.

In an embodiment of the present invention, a content of a binder included in the second safety function layer corresponds to 0.5 to 10 wt% of a total weight of the second safety function layer.

In an embodiment of the present invention, a total thickness of the safety function layer is in a range of 1 to 20 *µ*m.

In an embodiment of the present invention, a thickness of one safety function layer is equal to or less than 7 *µ*m.

In an embodiment of the present invention, an average particle diameter (D₅₀) of the first positive electrode active material is equal to or less than 4 *µ*m, and is smaller than an average particle diameter (D₅₀) of the second positive electrode active material.

In an embodiment of the present invention, the average particle diameter (D₅₀) of the first positive electrode active material is in a range of 0.1 to 3*µ*m.

The lithium secondary battery of the present invention includes the above-described positive electrode; a separator; and a negative electrode.

### [Advantageous Effects]

According to a positive electrode for a lithium secondary battery and a lithium secondary battery including the positive electrode of the present invention, the safety function layer is formed of a plurality of layers, and the composition of the second safety function layer, which is arranged between the positive electrode mixture layer and the first safety function layer closest to the current collector, gradually changes from the first safety function layer to the positive electrode mixture layer as the composition of the first safety function layer is blended with the composition of the positive electrode mixture layer, which may relieve an interface crack between the safety function layer and the positive electrode mixture layer and improve the lifespan characteristics of the battery.

Further, it is possible to increase the penetration resistance in the case that a metal body such as a nail penetrates an electrode by decreasing the elongation rate of the safety function layer adjacent to the positive electrode current collector. As such, it is possible to provide a positive electrode for a secondary battery, which is capable of preventing ignition or explosion of a battery due to overcurrent and improving safety by suppressing overcurrent, and a secondary battery including the positive electrode.

### [Brief Description of the Drawings]

FIG. 1 is a cross-sectional view of a positive electrode according to a conventional technology.
FIG. 2 is a cross-sectional view of a positive electrode according to an embodiment of the present invention.
FIG. 3 is a cross-sectional view of a positive electrode according to another embodiment of the present invention.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

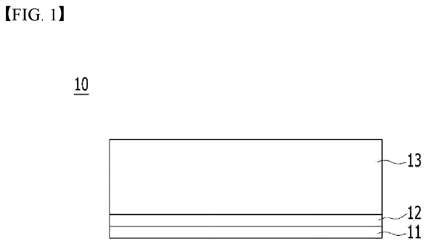

FIG. 1 is a cross-sectional view of a positive electrode including a conventional safety function layer. Referring to FIG. 1, in a positive electrode 10 including a conventional safety function layer 12, a safety function layer 12 is interposed between a positive electrode current collector 11 and a positive electrode mixture layer 13. The safety function layer 12 can improve the safety of the battery by preventing a needle conductor from directly contacting a current collector when a positive electrode 10 is penetrated by the needle conductor, or decreasing a short circuit current by the decrease of a contact area between the needle conductor and the current collector. However, a volume difference between the safety function layer and the positive electrode mixture layer occurs according to the charge and discharge in the positive electrode, which leads to a crack generation on the interface, thereby deteriorating lifespan characteristics of a battery.

As such, an object of the present invention is to provide a positive electrode for improving safety of a battery without deterioration of lifespan characteristics by an interface crack between the safety function layer and the positive electrode mixture layer.

Hereinafter, the present invention will be described in detail with reference to the drawings.

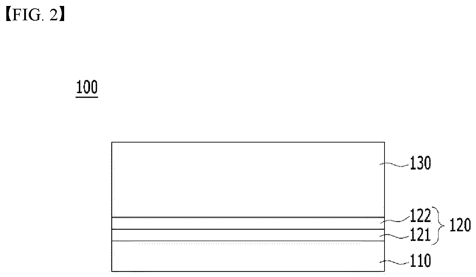

FIG. 2 is a cross-sectional view of a positive electrode according to an embodiment of the present invention. Referring to FIG. 2, a positive electrode 100 for a lithium secondary battery of the present invention includes: a safety function layer 120 arranged on a positive electrode current collector 110; and a positive electrode mixture layer 130 arranged on the safety function layer 120. Herein, the safety function layer 120 is formed of a multi-layer structure of two or more layers including a first safety function layer 121 contacting the positive electrode current collector, and a second safety function layer 122 arranged on the first safety function layer. Further, the second safety function layer is obtained by mixing a composition of the first safety function layer with a composition of the positive electrode mixture layer.

Herein, the mixture of the composition of the first safety function layer and the composition of the positive electrode mixture layer may include both the positive electrode active material included in the first safety function layer and the positive electrode active material included in the positive electrode mixture layer, or may include both the positive electrode active material and binder included in the first safety function layer and the positive electrode active material and binder included in the positive electrode mixture layer, or may include all of conductive materials and other additives in the case that the first safety function layer or the positive electrode mixture layer additionally include such conductive material or additives.

The safety function layer 120 of the positive electrode according to an embodiment of the present invention may be formed of 2 layers, the second safety function layer 122 is interposed between the positive electrode mixture layer 130 and the first safety function layer 121 contacting the positive electrode current collector 110, and the composition of the second safety function layer is configured by blending the composition of the first safety function layer 121 with the composition of the positive electrode mixture layer 130. As such, the second safety function layer buffers the difference between the first safety function layer and the positive electrode mixture layer, and accordingly, it is possible to suppress generation of a crack between layers according to repetition of charge and discharge and prevent deterioration of lifespan characteristics.

In an embodiment of the present invention, the first safety function layer includes a first positive electrode active material, and the positive electrode mixture layer includes a second positive electrode active material which is different from the first positive electrode active material. Hence, the second safety function layer, which performs the function of buffering the volume difference therebetween, includes both the first positive electrode active material and the second positive electrode active material as the positive electrode active material.

In an embodiment of the present invention, the first positive electrode active material is lithium iron phosphate having an olivine structure, represented by a following chemical formula 1:

[Chemical formula 1] Li₁₊ₐFe₁₋ₓMₓ(PO_{4-b})X_{b}

Herein, M is at least one selected from the group consisting of Al, Mg and Ti, X is at least one selected from the group consisting of F, S and N, -0.5≤a≤+0.5, 0≤x≤0.5, and 0≤b≤0.1.

The positive electrode active material having an olivine structure has a characteristic that the volume decreases as lithium in the safety function layer is discharged at about 4.5V or higher overcharge voltage. As such, the conductive path of the safety function layer is quickly blocked by selecting the lithium iron phosphate as the first positive electrode active material included in the safety function layer, and the safety function layer acts as an insulating layer and the resistance increases, which increases the resistance and blocks the charging current, thereby reaching the overcharge termination voltage. Hence, in the present invention, it is possible to show synergy effects in terms of safety improvement by selecting a positive electrode active material having the olivine structure as the first positive electrode active material.

Likewise, in the case that the positive electrode active material having the olivine structure is selected as the first positive electrode active material, the safety function layer of the present invention operates like a general positive electrode active material layer when a battery normally operates, and prevents a contact with a needle conductor or prevents overcharge by a rise of the resistance when penetrated by an external needle conductor or at an overcharged state, thereby ultimately improving safety.

In an embodiment of the present invention, the content of the first positive electrode active material contained in the first safety function layer corresponds to 50 to 99 wt% of the total weight of the first safety function layer.

Further, the second positive electrode active material included in the positive electrode mixture layer may contain a lithium nickel complex metal oxide which allows easy large capacity battery implementation by having a high reversible capacity. A lithium transition metal oxide represented by chemical formula 2 below is a specific example of the second positive electrode active material.

[Chemical formula 2] LiₐNi_{1-x-y}CoₓMn_{y}M_{z}O₂

wherein M is at least one selected from the group consisting of Al, Zr, Ti, Mg, Ta, Nb, Mo and Cr, and wherein 0.9≤a≤1.5, 0≤x≤1, 0≤y≤1, 0≤z≤0.1, and 0≤x+y≤1.

However, the second positive electrode active material is not necessarily limited by a lithium transition metal oxide represented by chemical formula 2, and the second positive electrode active material may include a layered compound such as lithium cobalt oxide (LiCoO₂), lithium nickel oxide (LiNiO₂), or a compound substituted with one or more transition metals; lithium manganese oxides such as Li₁₊ₓ₁Mn₂₋ₓ₁O₄ (herein, x1 is between 0 and 33), LiMnO₃, LiMn₂O₃, and LiMnO₂; lithium copper oxide (Li₂CuO₂); vanadium oxides such as LiV₃O₈, LiV₃O₄, V₂O₅, and Cu₂V₂O₇; lithium nickel oxide expressed by LiNi₁₋ₓ₂M¹ₓ₂O₂ (herein, M¹ = Co, Mn, Al, Cu, Fe, Mg, B or Ga, and x₂ = 0.01 to 0.3); a lithium manganese compound oxide expressed by LiMn₂₋ₓ₃M²ₓ₃O₂ (herein, M² = Co, Ni, Fe, Cr, Zn or Ta, x₃ = 0.01 to 0.1) or Li₂Mn₃M³O₈ (herein, M³ = Fe, Co, Ni, Cu or Zn); a spinel type lithium manganese compound oxide expressed by LiNiₓ₄Mn₂₋ₓ₄O₄ (herein, x₄ = 0.01 to 1); LiMn₂O₄ in which a part of Li is substituted with an alkaline earth metal ion; disulfide compounds; Fe₂(MoO₄)₃, etc.

The second safety function layer contains the first positive electrode active material, the second positive electrode active material, and a binder. As described above, the second safety function layer of the present invention relieves generation of a crack on the interface between the first safety function layer and the positive electrode mixture layer. Hence, the second safety function layer includes both the positive electrode active material of the first safety function layer and the positive electrode active material of the positive electrode mixture layer as the positive electrode active material.

At this time, the weight ratio of the first positive electrode active material to the second positive electrode active material contained in the second safety function layer corresponds to 85: 15 to 25: 75 and preferably 80: 20 to 30: 70. It is preferable that the mixing ratio between the first positive electrode active material and the second positive electrode active material included in the second safety function layer is in the above range in terms of relieving generation of an interface crack and preventing overcharge.

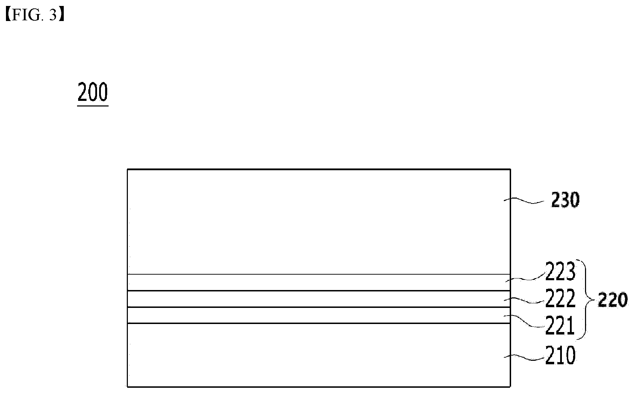

Further, FIG. 2 illustrates an example in which a safety function layer is composed of two layers, but the present invention is not limited to this example, and as shown in the example of FIG. 3, the safety function layer may be formed of 3 or more layers.

In this case, the composition of the remaining safety function layer except for the first safety function layer tends to gradually become similar to the composition of the positive electrode mixture layer toward the positive electrode mixture layer, and tends to gradually become similar to the composition of the first safety function layer toward the positive electrode current collector. If the safety function layer is formed of 3 layers as shown in FIG. 3 and is a positive electrode having a structure obtained by sequential lamination of a positive electrode current collector 210, a first safety function layer 221, a second safety function layer 222, a third safety function layer 223 and a positive electrode mixture layer 230, the weight% of the first positive electrode active material contained in the safety function layer gradually decreases toward the positive electrode mixture layer, and on the contrary, the weight% of the second positive electrode active material gradually increases toward the positive electrode mixture layer.

Further, in the positive electrode of the present invention, adhesive force A between the positive electrode current collector and the first safety function layer is greater than adhesive force B between the first safety function layer and the second safety function layer. As such, since the first safety function layer is attached on the positive electrode current collector without being peeled off from the positive electrode current collector when penetrated by a needle conductor, it shows the effects of improving safety of the battery by preventing or suppressing a direct contact with the positive electrode current collector.

In an embodiment of the present invention, the adhesive force B between the first safety function layer and the second safety function layer is equal to or greater than adhesive force C between the second safety function layer and the positive electrode mixture layer.

This is to minimize the contact area between a positive electrode current collector and a metal body such as a nail when the metal body penetrates the positive electrode. Namely, when a metal body penetrates a positive electrode, external force is applied to the positive electrode, and a gap may be generated at each of a space between the positive electrode current collector and the first safety function layer, a space between the first safety function layer and the second safety function layer, and a space between the second safety function layer and the positive electrode mixture layer. At this time, in the case that the adhesive force A is respectively greater than the adhesive force B and the adhesive force C, even if the first safety function layer is detached from the second safety function layer, it is difficult for the metal body to directly contact the positive electrode current collector because the first safety function layer is still attached on the positive electrode current collector. Further, in the case that the adhesive force B is relatively greater than adhesive force C, even if the second safety function layer is detached from the positive electrode mixture layer, the second safety function layer may still be attached on the first safety function layer and protect the first safety function layer from direct application of external force of the metal body. As such, it is possible to further suppress a tendency that the first safety function layer is detached from the positive electrode current collector by external force of the metal body.

Further, the size of the adhesive force between respective layers can be controlled to be A>B≥C by adjusting the content of each binder contained in each of the first safety function layer, the second safety function layer and the positive electrode mixture layer.

As such, in the positive electrode according to one embodiment of the present invention, the weight% of the binder contained in each layer decreases as it becomes farther away from the current collector. Herein, "weight%" refers to the ratio by which the weight of the binder occupies in the total weight of one layer. On the assumption that "a" is defined as the weight% of the binder contained in the first safety function layer based on the total weight of the first safety function layer, "b" is defined as the weight% of the binder contained in the second safety function layer based on the total weight of the second safety function layer, and "c" is defined as the weight% of the binder contained in the positive electrode mixture layer based on the total weight of the positive electrode mixture layer, the relationship between a, b and c becomes a > b > c.

Further, the content of the binder contained in the first safety function layer is in the range of 5 to 30 wt%, preferably in the range of 7 to 25 wt%, and more preferably in the range of 8 to 20 wt% based on the total weight of the first safety function layer. In the case that the content of the binder contained in the first safety function layer is less than 5 wt%, when penetrated by a needle conductor, the effect of preventing a direct contact between the needle conductor and the current collector is weak, and accordingly a short circuit may occur. On the contrary, if the content of the binder contained in the first safety function layer exceeds 30 wt%, the balance between the second safety function layer and the positive electrode mixture layer is lost.

Further, the content of a binder included in the second safety function layer may correspond to 0.5 to 10 wt% of the total weight of the second safety function layer. Since the second safety function layer buffers a difference between the first safety function layer and the positive electrode mixture layer, the weight% of the binder may be similar to or slightly greater than the weight% of the binder contained in the positive electrode mixture layer.

In an embodiment of the present invention, the adhesive force A between the current collector and the first safety function layer may be in the range of 100 to 500 N/m, preferably in the range of 150 to 300 N/m, and more preferably in the range of 200 to 300 N/m.

The adhesive force B between the first safety function layer and the second safety function layer may be in the range of 20 to 150 N/m, preferably in the range of 20 to 100 N/m, and more preferably in the range of 40 to 100 N/m.

The adhesive force C between the second safety function layer and the positive electrode mixture layer may be in the range of 10 to 40 N/m, preferably in the range of 15 to 35 N/m, and more preferably in the range of 20 to 35 N/m.

The safety function layer and the positive electrode mixture layer of the present invention include a binder, and the binder attaches the positive electrode active material particles and improves adhesive force between the positive electrode active material and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluororubber, or various copolymers thereof, and one kind or a mixture of two or more kinds of them may be used.

In an embodiment of the present invention, the binder contained in the safety function layer and the binder contained in the positive electrode mixture layer may be the binder having the same physical properties. For example, if the binder included in the safety function layer is a hydrophilic binder, the binder included in the positive electrode mixture layer may also be a hydrophilic binder. On the contrary, if the binder included in the safety function layer is a lipophilic binder, the binder included in the positive electrode mixture layer may also be a lipophilic binder.

In an embodiment of the present invention, the total thickness of the safety function layer may be in the range of 1 to 20 *µ*m, preferably in the range of 2 to 15 *µ*m, and more preferably in the range of 3 to 15 *µ*m. Herein, the safety function layer means a multi-layer safety function layer interposed between the positive electrode current collector and the positive electrode mixture layer.

In an embodiment of the present invention, the thickness of each layer constituting the safety function layer may be equal to or less than 7 *µ*m, preferably equal to or less than 5 *µ*m, and more preferably in the range of 1 to 5 *µ*m. If the thickness of one safety function layer is too large, the total thickness of the entire safety function layer becomes too large, which is not desirable.

In an embodiment of the present invention, an average particle diameter (D₅₀) of the first positive electrode active material included in the first safety function layer is equal to or less than 4 *µ*m, and is smaller than an average particle diameter (D₅₀) of the second positive electrode active material. Specifically, the average particle diameter (D₅₀) of the first positive electrode active material may correspond to 10 to 80% of the average particle diameter (D₅₀) of the second positive electrode active material.

Namely, according to an embodiment of the present invention, the first safety function layer is configured to include positive electrode active materials having a relatively small average particle diameter (D₅₀) to thereby decrease the elongation rate of the first safety function layer, and as the elongation rate of the first safety function layer decreases, the positive electrode current collector is not elongated like the needle conductor and is disconnected in a situation that the needle conductor is penetrated, thereby improving the penetration safety.

In the present invention, the average particle diameter D₅₀ may be defined as a particle diameter corresponding to 50% of the volume accumulation amount in the particle diameter distribution curve. The average particle diameter D₅₀ may be measured using, for example, a laser diffraction method. For example, according the method of measuring the average particle size (D₅₀) of the positive electrode active material, after dispersing particles of the positive electrode active material in a dispersion medium, the ultrasonic waves of about 28 kHz are irradiated with the output of 60 W by introducing a commercially available laser diffraction particle size measuring apparatus (e.g., Microtrac MT 3000), and then the average particle size (D₅₀) corresponding to 50% of the volume accumulation amount in the measuring apparatus may be calculated.

Specifically, the average particle diameter of the first positive electrode active material may be equal to or less than 4 *µ*m. More preferably, the average particle diameter (D₅₀) of the first positive electrode active material may be in the range of 0.1 to 3 *µ*m, and preferably in the range of 0.1 to 2 *µ*m. When the average particle diameter (D₅₀) of the first positive electrode active material is less than 0.1 *µ*m, electrode side reaction may occur or dispersibility may decrease during the electrode manufacturing process, and when the average particle diameter (D₅₀) of the first positive electrode active material exceeds 4 *µ*m, the adhesive force with the positive electrode current collector may decrease, and the safety improvement effects may decrease as the elongation rate of the first safety function layer increases.

The second positive electrode active material may be particles having an average particle diameter (D₅₀) relatively greater than that of the first positive electrode active material.

Specifically, the average particle diameter (D₅₀) of the second positive electrode active material may be equal to or greater than 3 *µ*m. More preferably, the average particle diameter (D₅₀) of the second positive electrode active material may be in the range of 3 to 30 *µ*m, and preferably in the range of 3 to 20 *µ*m. When the average particle diameter (D₅₀) of the second positive electrode active material is less than 3 *µ*m, there may be a difficulty in the rolling process at the time of manufacturing an electrode.

Further, the specific surface area of the first positive electrode active material may be equal to or greater than 3 m²/g, preferably in the range of 5 to 25 m²/g, and more preferably in the range of 7 to 20 m²/g. If the specific surface area is less than 2 m²/g, the elongation rate of the first safety function layer and the second safety function layer may increase, which is not desirable.

In the present invention, the specific surface area is measured by BET method and may specifically be calculated from the nitrogen gas adsorption amount at a liquid nitrogen temperature (77K) using BELSORP-mino II of BEL Japan company.

The porosity of the first safety function layer according to an embodiment of the present invention may be in the range of 20 to 40%, and the porosity of the positive electrode mixture layer may be smaller than that of the first safety function layer and be in the range of 15 to 35%. It is possible to increase the amount of gas oxidation on the surface of small particles at a high voltage by controlling the porosity of the first safety function layer to become large, through which the safety can be improved by preventing generation of overcurrent by increasing the resistance of the first safety function layer.

The porosity can be measured by an SEM analysis. As a method of quantifying the porosity distribution in the thickness direction of the electrode, the electrode before analysis is filled with epoxy, which was dried at a vacuum state to thereby prepare a sample for analysis, which was then divided into 9 parts at regular intervals, and the electrode active material layer sample was cut in the thickness direction along a straight line divided into 9 parts by an ion milling scheme. Thereafter, the cross-section was photographed as SEM (10kV) images, and the area ratio of the pores for the entire cross-section area was calculated and the average value of 9 porosity area ratios was used as the porosity value for the electrode active material layer.

In the positive electrode according to an embodiment of the present invention, the difference in the elongation rate between the first safety function layer and the positive electrode mixture layer may be in the range of 0.1 to 1.0% and more preferably in the range of 0.2 to 0.7%. In the present invention, the elongation rate is a value measured using UTM equipment, and when elongated at the rate of about 5 mm/min. after mounting the first safety function layer or the positive electrode mixture layer, the elongation rate was measured through the length change until the positive electrode mixture layer is elongated as much as possible, compared to the length of the existing positive electrode mixture layer.

Likewise, it is possible to improve cell performance such as lifespan characteristics while increasing the penetration resistance by maximizing the difference in elongation rate between the lower portion and the upper portion of the electrode by forming a positive electrode mixture layer using positive electrode active materials formed of large size particles having a small specific surface area while maximizing the decrease of the elongation rate of the first safety function layer.

Specifically, the elongation rate of the first safety function layer may be in the range of 0.2 to 1.2% and more preferably in the range of 0.2 to 0.5%. It is possible to significantly increase the penetration resistance in the case that a metal body penetrates an electrode as the elongation rate of the positive electrode current collector and the first safety function layer satisfies the above range, and it is possible to improve safety by preventing generation of overcurrent through the increase of the penetration resistance.

Further, the elongation rate of the positive electrode mixture layer may be in the range of 0.6 to 2.0% and more preferably in the range of 0.6 to 0.9%. It is possible to maintain the elongation rate of the entire positive electrode to be equal to or greater than a certain level as the elongation rate of the positive electrode mixture layer positioned on the upper portion of the electrode satisfies the above range, and it is possible to prevent a problem that a disconnection occurs during the rolling process at the time of performing an electrode manufacturing process.

Further, the total elongation rate of the manufactured positive electrode may be less than 1.4%. The average particle diameter (D₅₀) of the positive electrode active material contained in the positive electrode mixture layer and the first safety function layer was changed as described above, and the difference in elongation rate between the first safety function layer and the positive electrode mixture layer may be set to be in the range of 0.1 to 1.0%, and preferably in the range of 0.2 to 0.7% by controlling the porosity of each layer. Further, the total elongation rate of the positive electrode may be set to be less than 1.4%.

In an embodiment of the present invention, at least one of the safety function layer and the positive electrode mixture layer further includes a conductive material. Such a conductive material is not particularly limited as long as it has electrical conductivity without causing a chemical change in the battery, and examples thereof include graphite such as natural graphite and artificial graphite; carbon-based materials such as carbon black, acetylene black, Ketjen black, channel black, furnace black, lamp black, summer black, and carbon fiber; metal powder or metal fiber such as copper, nickel, aluminum and silver; conductive whiskey such as zinc oxide and potassium titanate; conductive metal oxides such as titanium oxide; and conductive materials such as polyphenylene derivatives and the like. The conductive material may be included in a 1 to 30% by weight based on the total weight of the positive electrode mixture layer.

In the present invention, the positive electrode current collector is not particularly limited as long as it has conductivity without causing a chemical change in a battery. Examples of the positive electrode current collector include stainless steel, aluminum, nickel, titanium, sintered carbon or aluminum or stainless steel of which the surface has been treated with carbon, nickel, titanium, silver, or the like. Further, the positive electrode current collector may generally have a thickness of 3 to 500*µ*m, and it is possible to increase the adhesive force of the positive electrode active material by forming minute irregularities on the surface of the positive electrode current collector. It may be used as various forms such as a film, a sheet, a foil, a net, a porous body, a foam, and a nonwoven fabric.

In addition, the present invention provides an electrochemical device including the positive electrode. The electrochemical device may be specifically a battery or a capacitor, and more specifically, it may be a lithium secondary battery.

Specifically, the lithium secondary battery includes a positive electrode, a negative electrode facing against the positive electrode, a separator interposed between the positive electrode and the negative electrode, and an electrolyte, and the positive electrode has been described above. Further, the lithium secondary battery may selectively further include a battery case for accommodating the electrode assembly of the positive electrode, the negative electrode and the separator, and a sealing member for sealing the battery case.

In the lithium secondary battery, the negative electrode includes a negative electrode current collector and a negative electrode mixture layer positioned on the negative electrode current collector.

The negative electrode current collector is not particularly limited as long as it has high electrical conductivity without causing chemical changes in the battery, and examples thereof include copper, stainless steel, aluminum, nickel, titanium, sintered carbon, copper or stainless steel of which the surface has been treated with carbon, nickel, titanium, silver or the like, aluminum-cadmium alloy, or the like. Further, the negative electrode current collector may generally have a thickness of 3 to 500 *µ*m, and may strengthen the coupling force of the negative electrode active material by forming minute irregularities on the surface of the negative electrode current collector as in the positive electrode current collector. It may be used as various forms such as a film, a sheet, a foil, a net, a porous body, a foam, and a nonwoven fabric.

The negative electrode mixture layer includes a negative electrode active material, a binder, and a conductive material. The negative electrode mixture layer may be manufactured by applying a composition for forming a negative electrode mixture layer containing a negative electrode active material and optionally a binder and a conductive material on a negative electrode current collector and drying them, or by casting the composition for forming the negative electrode mixture layer on a separate support and then laminating a film, obtained by peeling the slurry from the support on the negative electrode current collector.

A compound**,** in which a reversible intercalation and deintercalation of lithium is possible, may be used as the negative electrode active material. Specific examples thereof include carbonaceous materials such as artificial graphite, natural graphite, graphitized carbon fiber and amorphous carbon; A metal substance capable of alloying with lithium such as Si, Al, Sn, Pb, Zn, Bi, In, Mg, Ga, Cd, Si alloy, Sn alloy or Al alloy; Metal oxides such as SiOx (0 < x < 2), SnO2, vanadium oxide, and lithium vanadium oxide that can dope and dedope lithium; or a composite containing the above-described metallic substance and a carbonaceous material such as a Si-C composite or a Sn-C composite, and any one or a mixture of two or more of them. In addition, a metal lithium thin film may be used as the negative electrode active material. As the carbon material, both low-crystalline carbon and high-crystalline carbon may be used. Examples of the low-crystalline carbon include soft carbon and hard carbon. Examples of the highly crystalline carbon include amorphous, flaky, scaly, spherical or fibrous natural graphite or artificial graphite, Kish graphite, pyrolytic carbon, mesophase pitch based carbon fiber, meso-carbon microbeads, mesophase pitches and petroleum or coal tar pitch derived cokes.

In addition, the binder and the conductive material may be the same as described in the positive electrode previously.

Meanwhile, in the lithium secondary battery, the separator is used to separate the negative electrode from the positive electrode and provide a moving path of lithium ions, and any separator generally used in a lithium secondary battery may be used without any special limitation. In particular, a separator having a high electrolyte solution moisturization capability and a low resistance to ion movement of electrolyte solution is preferred. Specifically, porous polymer films, for example, porous polymer films made of polyolefin-based polymers such as ethylene homopolymers, propylene homopolymers, ethylene/butene copolymers, ethylene/hexane copolymers and ethylene/methacrylate copolymers may be used. Further, a nonwoven fabric made of a conventional porous nonwoven fabric, for example, glass fiber of high melting point, polyethylene terephthalate fiber, or the like may be used. In order to secure heat resistance or mechanical strength, a coated separator containing a ceramic component or a polymer material may be used, and may be optionally used as a single layer or a multilayer structure.

Examples of the electrolyte used in the present invention include an organic liquid electrolyte, an inorganic liquid electrolyte, a solid polymer electrolyte, a gel polymer electrolyte, a solid inorganic electrolyte, and a molten inorganic electrolyte which can be used in the production of a lithium secondary battery, but the present invention is not limited to these examples.

Specifically, the electrolyte may include an organic solvent and a lithium salt.

The organic solvent may be any organic solvent that can act as a medium through which ions involved in an electrochemical reaction of a battery can move. Specifically, examples of the organic solvent include ester solvents such as methyl acetate, ethyl acetate, γ-butyrolactone and γ-caprolactone; ether solvents such as dibutyl ether or tetrahydrofuran; ketone solvents such as cyclohexanone; aromatic hydrocarbon solvents such as benzene and fluorobenzene; carbonate solvents such as dimethyl carbonate (DMC), diethyl carbonate (DEC), methyl ethyl carbonate (MEC), ethylmethylcarbonate (EMC), ethylene carbonate (EC), and propylene carbonate (PC); alcohol solvents such as ethyl alcohol and isopropyl alcohol; nitriles such as R-CN (R is a straight, branched or cyclic hydrocarbon group of C2 to C20, which may contain a double bond aromatic ring or ether bond); amides such as dimethylformamide; dioxolanes such as 1,3-dioxolane; or sulfolane. Among them, a carbonate-based solvent is preferable, and a mixture of a cyclic carbonate (for example, ethylene carbonate or propylene carbonate) having a high ionic conductivity and a high dielectric constant which can increase the charge/discharge performance of a battery, and a linear carbonate compound having a low viscosity (for example, ethyl methyl carbonate, dimethyl carbonate or diethyl carbonate) is more preferable. In this case, when the cyclic carbonate and the chain carbonate are mixed in a volume ratio of about 1: 1 to about 1: 9, the performance of the electrolytic solution may be excellent.

The lithium salt can be used without any particular limitation as long as it is a compound capable of providing lithium ions used in a lithium secondary battery. Specifically, the lithium salt may be LiPF6, LiClO4, LiAsF6, LiBF4, LiSbF6, LiAlO4, LiAlCl4, LiCF3SO3, LiC4F9SO3, LiN(C2F5SO3)2, LiN(C2F5SO2)2, LiN(CF3SO2)2. LiCl, LiI, or LiB(C₂O₄)2 may be used. The concentration of the lithium salt is preferably within the range of 0.1M to 2.0M. When the concentration of the lithium salt is within the above range, the electrolyte has an appropriate conductivity and viscosity, so that it can exhibit excellent electrolyte performance and the lithium ions can effectively move.

In addition to the electrolyte components, in order to improve the life characteristics of the battery, inhibit the battery capacity reduction, and improve the discharge capacity of the battery, the electrolyte may contain one or more of a haloalkylene carbonate-based compound such as difluoroethylene carbonate, pyridine, triethyl phosphate, triethanolamine, cyclic ether, ethylene diamine, n-glyme, and hexa phosphate triamide, nitrobenzene derivative, sulfur, quinone imine dye, N-substituted oxazolidinone, N, N-substituted imidazolidine, ethylene glycol dialkyl ether, ammonium salt, pyrrole, 2-methoxy ethanol or, aluminum trichloride. Herein, The additive may be included in an amount of 0.1 wt% to 5 wt% based on the total weight of the electrolyte.

Lithium secondary batteries including a positive electrode active material according to the present invention are useful for electric vehicles and portable devices such as mobile phones, laptop computers, and digital cameras and electric cars such as hybrid electric vehicles because the lithium secondary batteries stably show excellent discharge capacity, output characteristics, and capacity retention rate.

According to another embodiment of the present invention, there is provided a battery module including the lithium secondary battery as a unit cell and a battery pack including the same.

The battery module or the battery pack may be used as a middle or large size device power source of one or more of a power tool; an electric vehicle including an electric vehicle (EV), a hybrid electric vehicle, and a plug-in hybrid electric vehicle (PHEV); or a system for power storage.

Hereinafter, embodiments of the present invention will be described in detail so that those skilled in the art can easily carry out the present invention. The present invention may, however, be embodied in many different forms and should not be construed as limited to the embodiments set forth herein.

### Example 1

### <Manufacturing of slurry for first safety function layer>

88 wt% of LiFePO₄ positive electrode active material having an average particle diameter (D₅₀) of 1 *µ*m and a BET specific surface area of 15 m²/g, 2 wt% of carbon black as a conductive material, and 10 wt% of PVdF as a binder were mixed in N-methyl pyrrolidone (NMP) as a solvent, to thereby prepare a slurry for a first safety function layer.

### <Manufacturing of slurry for positive electrode mixture layer>

96 wt% of LiNi_{0.8}Co_{0.1}Mn_{0.1}O₂ positive electrode active material having an average particle diameter (D₅₀) of 4 *µ*m and a BET specific surface area of 0.7 m²/g, 2 wt% of carbon black as a conductive material, and 2 wt% of PVdF as a binder were mixed in N-methyl pyrrolidone (NMP) as a solvent, to thereby prepare a slurry for a positive electrode mixture layer.

### <Manufacturing of slurry for second safety function layer>

70 wt% of LiFePO₄ positive electrode active material having an average particle diameter (D₅₀) of 1 *µ*m and a BET specific surface area of 15 m²/g, 23 wt% of LiNi_{0.8}Co _{0.1}Mn_{0.1}O₂ positive electrode active material having an average particle diameter (D₅₀) of 4 *µ*m and a BET specific surface area of 0.7 m²/g, 2 wt% of carbon black as a conductive material, and 5 wt% of PVdF as a binder were mixed in N-methyl pyrrolidone (NMP) as a solvent, to thereby manufacture a slurry for a second safety function layer.

### <Preparation of positive electrode>

A positive electrode having a structure of an aluminum foil/ first safety function layer/ second safety function layer/ positive electrode mixture layer was manufactured by coating a slurry for the first safety function layer/ a slurry for a second safety function layer/a slurry for positive electrode mixture layer on an aluminum foil and drying and rolling the slurry-coated aluminum foil. The thickness of each of the first safety function layer and the second safety function layer was 4 *µ*m, and the thickness of the positive electrode mixture layer was 80 *µ*m.

### Example 2, Comparative example 1

A positive electrode was manufactured in the same manner as in the example 1 except that the composition of each layer was changed as shown in Table 1.

### Comparative Example 2

### <Manufacturing of slurry for safety function layer>

88 wt% of LiFePO₄ positive electrode active material having an average particle diameter (D₅₀) of 1 *µ*m and a BET specific surface area of 15 m²/g, 2 wt% of carbon black as a conductive material, and 10 wt% of PVdF as a binder were mixed in N-methyl pyrrolidone (NMP) as a solvent, to thereby prepare a slurry for a safety function layer.

### <Manufacturing of slurry for positive electrode mixture layer>

96 wt% of LiNi_{0.8}Co _{0.1}Mn_{0.1}O₂ positive electrode active material having an average particle diameter (D₅₀) of 4 *µ*m and a BET specific surface area of 0.7 m²/g, 2 wt% of carbon black as a conductive material, and 2 wt% of PVdF as a binder were mixed in N-methyl pyrrolidone (NMP) as a solvent, to thereby prepare a slurry for a positive electrode mixture layer.

### <Preparation of positive electrode>

A positive electrode having a structure of an aluminum foil/ safety function layer/ positive electrode mixture layer was manufactured by coating a slurry for the safety function layer/ a slurry for a positive electrode mixture layer on an aluminum foil and drying and rolling the slurry-coated aluminum foil. The thickness of the safety function layer was 10 *µ*m, and the thickness of the positive electrode mixture layer was 80 *µ*m.

### Comparative examples 3 to 4

A positive electrode was manufactured in the same manner as in the comparative example 2 except that the composition of each layer was changed as shown in Table 1.

**[Table 1]**

| | First safety function layer | Second safety function layer | Positive electrode mixture layer |
|---|---|---|---|
| Example 1 | LiFePO₄/conductive material/binder = 88/2/10 | LiFePO₄/LiNi_{0.8}Co _{0.1}Mn_{0.1}O₂/conductive material/binder = 70/23/2/5 | LiNi_{0.8}Co _{0.1}Mn_{0.1}O₂/conductive material/binder = 96/2/2 |
| Example 2 | LiFePO₄/conductive material/binder = 88/2/10 | LiFePO₄/LiNi_{0.8}Co _{0.1}Mn_{0.1}O₂/conductive material/binder = 35/58/2/5 | LiNi_{0.8}Co _{0.1}Mn_{0.1}O₂/conductive material/binder = 96/2/2 |
| Comparat ive Example 1 | LiFePO₄/conductive material/binder = 97/2/1 | LiFePO₄/LiNi_{0.8}Co _{0.1}Mn_{0.1}O₂/conductive material/binder = 35/58/2/5 | LiNi_{0.8}Co _{0.1}Mn_{0.1}O₂/conductive material/binder = 96/2/2 |
| Comparat ive Example 2 | LiFePO₄/conductive material/binder = 88/2/10 | | LiNi_{0.8}Co _{0.1}Mn_{0.1}O₂/conductive material/binder = 96/2/2 |
| Comparat ive Example 3 | LiFePO₄/LiNi_{0.8}Co_{0.1}Mn_{0.1}O₂/conductive material/binder = 70/20/2/8 | | LiNi_{0.8}Co _{0.1}Mn_{0.1}O₂/conductive material/binder = 96/2/2 |
| Comparat ive Example 4 | LiFePO₄/LiNi_{0.8}Co_{0.1}Mn_{0.1}O₂/conductive material/binder = 30/60/2/8 | | LiNi_{0.8}Co _{0.1}Mn_{0.1}O₂/conductive material/binder = 96/2/2 |

### Experimental Example 1: Evaluation of capacity retention rate

A lithium secondary battery was manufactured using each of a positive electrode manufactured in the examples 1 and 2 and a positive electrode manufactured in comparative examples 1 to 4.

First, natural graphite, carbon black conductive material, and PVDF binder were mixed in N-methyl pyrrolidone solvent at the weight ratio of 85: 10: 5, to thereby manufacture a slurry for forming a negative electrode, which was then coated on a copper foil to thereby manufacture a negative electrode.

Each electrode assembly was manufactured by interposing a separator of a porous polyethylene between the negative electrode and each positive electrode manufactured according to examples 1 and 2 and comparative examples 1 to 4, and each of the electrode assemblies was positioned in a case, and an electrolyte solution was injected into the case, to thereby manufacture a lithium secondary battery. At this time, lithium hexafluorophosphate (LiPF₆) of 1.0M concentration was dissolved in an organic solvent consisting of ethylene carbonate/dimethyl carbonate/ethyl methylcarbonate (EC / DMC / EMC volume ratio = 3/ 4/ 3) to manufacture an electrolyte solution.

100 and 200 cycles of charge and discharge were performed for a lithium secondary battery, which was manufactured using each positive electrode manufactured in the examples 1 and 2 and comparative examples 1 to 4, at the condition of charging end voltage 4.25V, discharging end voltage 2.5V, and 0.5C/0.5C at 25°C, and the capacity retention rate was measured during the charge and discharge and the result was shown in Table 2.

### Experimental example 2: Penetration safety evaluation

A lithium secondary battery was manufactured using each positive electrode manufactured in examples 1 and 2 and comparative examples 1 to 4 in the same manner as in the experimental Example 1.

Likewise, it was evaluated whether to be ignited when a metal body having a diameter of 3 mm descended at a speed of 80 mm/sec. and penetrated a cell in the same condition as PV8450 authentication condition for the manufactured lithium secondary battery, and the result was shown in Table 2 below.

### Experimental Example 3: Adhesive force measurement

Each of positive electrodes, which were manufactured in the examples 1 and 2 and in comparative example 1, were cut to have a width of 25 mm and a length of 70 mm. Thereafter, it was then laminated at the condition of 70°C and 4 MPa to thereby manufacture a specimen.

The prepared specimen was attached and fixed on a glass plate by using a double-sided tape, and at this time, a current collector was arranged to face the glass plate. The portion of the positive electrode mixture layer of specimen was peeled off at the speed of 100 mm/min. and 25°C and by 90 degrees, and the peel strength at this time was measured in real time and the average value was defined as interface adhesive force C between the second safety function layer and the positive electrode mixture layer, and the result was shown in Table 2.

The adhesive force B between the second safety function layer and the first safety function layer and the adhesive force A between the first safety function layer and the current collector were measured in the same manner as described above, and the result was shown in Table 2.

**[Table 2]**

| | Capacity retention rate (%) after 100 cycles | Capacity retention rate (%) after 200 cycles | Adhesive force (N/m) | | | Whether ignited (Pass/Test) |
|---|---|---|---|---|---|---|
| | | | A | B | C | |
| Example 1 | 98.3 | 95.1 | 261 | 78 | 25 | 6P/6T |
| Example 2 | 98.5 | 95.3 | 263 | 82 | 24 | 6P/6T |
| Comparati ve Example 1 | 97.1 | 90.6 | 124 | 38 | 24 | 2P/6T |
| Comparati ve Example 2 | 96.4 | 90.2 | 267 | - | 32 | 6P/6T |
| Comparati ve Example 3 | 98.5 | 95.6 | 223 | - | 29 | 1P/6T |
| Comparati ve Example 4 | 98.6 | 96.0 | 218 | - | 28 | 0P/6T |

Referring to the result of Table 2, a secondary battery including a positive electrode according to the example of the present invention has excellent penetration safety, but in the case of the battery of comparative examples 1, 3 and 4, ignition occurred at the penetration test. In the secondary battery including a positive electrode of comparative example 2, ignition did not occur at the penetration test by including a single-layer safety function layer composed of the same composition as that of the first safety function layer in Examples 1 and 2, but the lifespan characteristics was poorer than those of the positive electrode according to the example because it does not include the second safety function layer. Hence, a positive electrode and a lithium secondary battery including the same according to the present invention have penetration safety and show excellent lifespan characteristics.

The above description is merely illustrative of the technical idea of the present invention, and those skilled in the art to which the present invention pertains may make various modifications and variations without departing from the essential characteristics of the present invention. Therefore, the drawings disclosed in the present invention are not intended to limit the technical idea of the present invention but to describe the present invention, and the scope of the technical idea of the present invention is not limited by these drawings. The scope of protection of the present invention should be interpreted by the following claims, and all technical ideas within the scope equivalent thereto should be construed as being included in the scope of the present invention.

## Claims

1. A positive electrode for a lithium secondary battery, the positive electrode comprising:
a safety function layer arranged on a positive electrode current collector; and
a positive electrode mixture layer arranged on the safety function layer,
wherein the safety function layer is formed of a multi-layer structure of two or more layers including a first safety function layer contacting the positive electrode current collector, and a second safety function layer arranged on the first safety function layer, and
wherein the second safety function layer is obtained by mixing a composition of the first safety function layer with a composition of the positive electrode mixture layer;
wherein the first safety function layer includes a first positive electrode active material, and the positive electrode mixture layer includes a second positive electrode active material which is different from the first positive electrode active material;
wherein the second safety function layer contains the first positive electrode active material, the second positive electrode active material, and a binder,
wherein a content of a binder included in the first safety function layer corresponds to 5 to 30 wt% of a total weight of the first safety function layer.

2. The positive electrode of claim 1, wherein the first positive electrode active material is lithium iron phosphate having an olivine structure, represented by a following chemical formula 1:
[Chemical formula 1] Li₁₊ₐFe₁₋ₓMₓ(PO_{4-b})X_{b}
wherein M is at least one selected from the group consisting of Al, Mg and Ti, X is at least one selected from the group consisting of F, S and N, -0.5≤a≤+0.5, 0≤x≤0.5, and 0≤b≤0.1.

3. The positive electrode of claim 1, wherein the second positive electrode active material is a lithium transition metal oxide represented by a following chemical formula 2:
[Chemical formula 2] LiₐNi_{1-x-y}CoₓMn_{y}M_{z}O₂
wherein M is at least one selected from the group consisting of Al, Zr, Ti, Mg, Ta, Nb, Mo and Cr, and wherein 0.9≤a≤1.5, 0≤x≤1, 0≤y≤0.5, 0≤z≤0.1, and 0≤x+y≤1.

4. The positive electrode of claim 1, wherein the second safety function layer contains the first positive electrode active material and the second positive electrode active material at a weight ratio of 85: 15 to 25: 75.

5. The positive electrode of claim 1, wherein adhesive force A between the positive electrode current collector and the first safety function layer is greater than adhesive force B between the first safety function layer and the second safety function layer.

6. The positive electrode of claim 5, wherein the adhesive force B is equal to or greater than adhesive force C between the second safety function layer and the positive electrode mixture layer.

7. The positive electrode of claim 1, wherein a weight ratio of the binder included in each layer gradually decreases as a distance from the current collector increases.

8. The positive electrode of claim 7, wherein a content of a binder included in the second safety function layer corresponds to 0.5 to 10 wt% of a total weight of the second safety function layer.

9. The positive electrode of claim 1, wherein a total thickness of the safety function layer is in a range of 1 to 20 *µ*m.

10. The positive electrode of claim 1, wherein a thickness of one safety function layer is equal to or less than 7 *µ*m.

11. The positive electrode of claim 1, wherein an average particle diameter D₅₀ of the first positive electrode active material is equal to or less than 4 *µ*m, preferably in a range of 0.1 to 3 *µ*m, and is smaller than an average particle diameter D₅₀ of the second positive electrode active material.

12. A lithium secondary battery including the positive electrode for a lithium secondary battery of claim 1; a separator; and a negative electrode.

## Patentansprüche

1. Positive Elektrode für eine Lithium-Sekundärbatterie, die positive Elektrode umfassend:
eine Sicherheit-Funktionsschicht, welche an einem positiven Elektroden-Stromsammler angeordnet ist; und
eine positive Elektroden-Mischungsschicht, welche an der Sicherheit-Funktionsschicht angeordnet ist,
wobei die Sicherheit-Funktionsschicht aus einer Mehrschicht-Struktur von zwei oder mehr Schichten gebildet ist, welche eine erste Sicherheit-Funktionsschicht,
welche den positiven Elektroden-Stromsammler kontaktiert, und eine zweite Sicherheit-Funktionsschicht umfasst, welche an der ersten Sicherheit-Funktionsschicht angeordnet ist, und
wobei die zweite Sicherheit-Funktionsschicht durch Mischen einer Zusammensetzung der ersten Sicherheit-Funktionsschicht mit einer Zusammensetzung der positiven Elektroden-Mischungsschicht erhalten ist;
wobei die erste Sicherheit-Funktionsschicht ein erstes positives aktives Elektrodenmaterial umfasst und die positive Elektroden-Mischungsschicht ein zweites positives aktives Elektrodenmaterial umfasst, welches verschieden von dem ersten positiven aktiven Elektrodenmaterial ist;
wobei die zweite Sicherheit-Funktionsschicht das erste positive aktive Elektrodenmaterial, das zweite positive aktive Elektrodenmaterial und ein Bindemittel enthält,
wobei ein Gehalt eines Bindemittels, welches in der ersten Sicherheit-Funktionsschicht umfasst ist, 5 bis 30 Gewicht-% eines Gesamtgewichts der ersten Sicherheit-Funktionsschicht entspricht.

2. Positive Elektrode nach Anspruch 1, wobei das erste positive aktive Elektrodenmaterial Lithium-Eisen-Phosphat ist, welches eine Olivinstruktur aufweist, repräsentiert durch eine folgende chemische Formel 1:
[Chemische Formel 1] Li₁₊ₐFe₁₋ₓMₓ(PO_{4-b})X_{b}
wobei M wenigstens eines ist, ausgewählt aus der Gruppe, bestehend aus Al, Mg und Ti, X wenigstens eines ist, ausgewählt aus der Gruppe, bestehend aus F, S und N, -0,5≤a≤+0,5, 0≤x≤0,5 und 0≤b≤0,1.

3. Positive Elektrode nach Anspruch 1, wobei das zweite positive aktive Elektrodenmaterial ein Lithium-Übergangsmetall-Oxid ist, repräsentiert durch eine folgende chemische Formel 2:
[Chemische Formel 2] LiₐNi_{1-x-y}CoₓMn_{y}M₂O₂
wobei M wenigstens eines ist, ausgewählt aus der Gruppe, bestehend aus Al, Zr, Ti, Mg, Ta, Nb, Mo und Cr, und wobei 0,9≤a≤1,5, 0≤x≤1, 0≤y≤0,5, 0≤z≤0,1 und 0≤x+y≤1.

4. Positive Elektrode nach Anspruch 1, wobei die zweite Sicherheit-Funktionsschicht das erste positive aktive Elektrodenmaterial und das zweite positive aktive Elektrodenmaterial bei einem Gewichtsverhältnis von 85:15 bis 25:75 enthält.

5. Positive Elektrode nach Anspruch 1, wobei eine Haftkraft A zwischen dem positiven Elektroden-Stromsammler und der ersten Sicherheit-Funktionsschicht größer als eine Haftkraft B zwischen der ersten Sicherheit-Funktionsschicht und der zweiten Sicherheit-Funktionsschicht ist.

6. Positive Elektrode nach Anspruch 5, wobei die Haftkraft B gleich oder größer als eine Haftkraft C zwischen der zweiten Sicherheit-Funktionsschicht und der positiven Elektroden-Mischungsschicht ist.

7. Positive Elektrode nach Anspruch 1, wobei ein Gewichtsverhältnis des Bindemittels, welches in jeder Schicht umfasst ist, graduell abnimmt, wenn eine Distanz von dem Stromsammler zunimmt.

8. Positive Elektrode nach Anspruch 7, wobei ein Gehalt eines Bindemittels, welches in der zweiten Sicherheit-Funktionsschicht umfasst ist, 0,5 bis 10 Gewicht-% eines Gesamtgewichts der zweiten Sicherheit-Funktionsschicht entspricht.

9. Positive Elektrode nach Anspruch 1, wobei eine Gesamtdicke der Sicherheit-Funktionsschicht in einem Bereich von 1 bis 20 µm liegt.

10. Positive Elektrode nach Anspruch 1, wobei eine Dicke einer Sicherheit-Funktionsschicht gleich oder kleiner als 7 µm ist.

11. Positive Elektrode nach Anspruch 1, wobei ein durchschnittlicher Partikeldurchmesser D₅₀ des ersten positiven aktiven Elektrodenmaterials gleich oder kleiner als 4 µm ist, vorzugsweise in einem Bereich von 0,1 bis 3 µm, und kleiner als ein durchschnittlicher Partikeldurchmesser D₅₀ des zweiten positiven aktiven Elektrodenmaterials ist.

12. Lithium-Sekundärbatterie, welche die positive Elektrode für eine Lithium-Sekundärbatterie nach Anspruch 1; einen Separator; und eine negative Elektrode umfasst.

## Revendications

1. Électrode positive pour une batterie secondaire au lithium, l'électrode positive comprenant :
une couche à fonction de sécurité agencée sur un collecteur de courant d'électrode positive ; et
une couche de mélange d'électrode positive agencée sur la couche à fonction de sécurité,
dans laquelle la couche à fonction de sécurité est formée d'une structure multicouche de deux couches ou plus comportant une première couche à fonction de sécurité en contact avec le collecteur de courant d'électrode positive et une seconde couche à fonction de sécurité agencée sur la première couche à fonction de sécurité, et
dans laquelle la seconde couche à fonction de sécurité est obtenue par le mélange d'une composition de la première couche à fonction de sécurité avec une composition de la couche de mélange d'électrode positive ;
dans laquelle la première couche à fonction de sécurité comporte un premier matériau actif d'électrode positive, et la couche de mélange d'électrode positive comporte un second matériau actif d'électrode positive qui est différent du premier matériau actif d'électrode positive ;
dans laquelle la seconde couche à fonction de sécurité contient le premier matériau actif d'électrode positive, le second matériau actif d'électrode positive, et un liant,
dans laquelle une teneur d'un liant compris dans la première couche à fonction de sécurité correspond à 5 à 30 % en poids d'un poids total de la première couche à fonction de sécurité.

2. Électrode positive selon la revendication 1, dans laquelle le premier matériau actif d'électrode positive est un phosphate de fer et de lithium ayant une structure d'olivine, représenté par une formule chimique 1 suivante :
[Formule chimique 1] Li₁₊ₐFe₁₋ₓMₓ(PO_{4-b})X_{b}
dans laquelle M est au moins l'un sélectionné parmi le groupe constitué de Al, Mg et Ti, X est au moins l'un sélectionné parmi le groupe constitué de F, S et N, - 0,5 ≤ a ≤ +0,5, 0 ≤ x ≤ 0,5, et 0 ≤ b ≤ 0,1.

3. Électrode positive selon la revendication 1, dans laquelle le second matériau actif d'électrode positive est un oxyde de métal de transition et de lithium représenté par une formule chimique 2 suivante :
[Formule chimique 2] LiₐNi_{1-x-y}CoₓMn_{y}M_{z}O₂
dans laquelle M est au moins l'un sélectionné parmi le groupe constitué de Al, Zr, Ti, Mg, Ta, Nb, Mo et Cr, et dans laquelle 0,9 ≤ a ≤ 1,5, 0 ≤ x ≤ 1, 0 ≤ y ≤ 0,5, 0 ≤ z ≤ 0,1 et 0 ≤ x+y ≤ 1.

4. Électrode positive selon la revendication 1, dans laquelle la seconde couche à fonction de sécurité contient le premier matériau actif d'électrode positive et le second matériau actif d'électrode positive selon un rapport en poids de 85: 15 à 25: 75.

5. Électrode positive selon la revendication 1, dans laquelle une force d'adhérence A entre le collecteur de courant d'électrode positive et la première couche à fonction de sécurité est supérieure à une force d'adhérence B entre la première couche à fonction de sécurité et la seconde couche à fonction de sécurité.

6. Électrode positive selon la revendication 5, dans laquelle la force d'adhérence B est égale ou supérieure à une force d'adhérence C entre la seconde couche à fonction de sécurité et la couche de mélange d'électrode positive.

7. Électrode positive selon la revendication 1, dans laquelle un rapport en poids du liant compris dans chaque couche diminue progressivement à mesure qu'une distance par rapport au collecteur de courant augmente.

8. Électrode positive selon la revendication 7, dans laquelle une teneur d'un liant compris dans la seconde couche à fonction de sécurité correspond à 0,5 à 10 % en poids d'un poids total de la seconde couche à fonction de sécurité.

9. Électrode positive selon la revendication 1, dans laquelle une épaisseur totale de la couche à fonction de sécurité est dans une plage de 1 à 20 µm.

10. Électrode positive selon la revendication 1, dans laquelle une épaisseur d'une couche à fonction de sécurité est égale ou inférieure à 7 µm.

11. Électrode positive selon la revendication 1, dans laquelle un diamètre particulaire moyen D₅₀ du premier matériau actif d'électrode positive est égal ou inférieur à 4 µm, de préférence dans une plage de 0,1 à 3 µm, et est inférieur à un diamètre particulaire moyen D₅₀ du second matériau actif d'électrode positive.

12. Batterie secondaire au lithium comportant l'électrode positive pour une batterie secondaire au lithium selon la revendication 1 ; un séparateur ; et une électrode négative.
